# EUROPÄISCHE PATENTSCHRIFT

(11) **EP 0 867 252 B1**
(45) Veröffentlichungstag und Bekanntmachung des Hinweises auf die Patenterteilung: **11.12.2002**
(21) Anmeldenummer: 98102588.5
(22) Anmeldetag: 14.02.1998
(51) Int. Cl.: B23G 5/06

(54) **Werkzeug zur Herstellung eines Gewindes in einem Werkstück, vorzugsweise Gewindebohrer**
Tool to manufacture a thread on a workpiece, eg. tap
Outil à fabriquer un filetage dans une pièce, par exemple taraud

(30) Priorität: 27.03.1997 DE 19713041
(43) Veröffentlichungstag der Anmeldung: 30.09.1998
(73) Patentinhaber: Joh. & Ernst Link GmbH & Co. KG, D-70565 Stuttgart (DE)
(72) Erfinder: Schurer, Werner, 711101 Schönaich (DE)
(74) Vertreter: Kohl, Karl-Heinz

(56) Entgegenhaltungen:
- EP-A- 0 278 930
- WO-A-88/05361
- DE-C- 259 467
- DE-C- 388 494

## Beschreibung

Die Erfindung betrifft ein Werkzeug zur Herstellung eines Gewindes in einem Werkstück, vorzugsweise Gewindebohrer, nach dem Oberbegriff des Anspruches 1.

Bei einem Gewindebohrer (EP 0 278 930, WO 88/05361) tritt das Problem auf, daß der erste Gewindegang der Gewindebohrung unvollständig ist. Der spiralig verlaufende Gewindesteg wirkt wie ein Grat, der das Einschrauben der Schraubteile erschwert. Beim Einschrauben kann der Gewindesteg des unvollständigen ersten Gewindeganges weggedrückt oder sogar abgebrochen werden, wodurch die Funktionsfähigkeit des in die Gewindebohrung geschraubten Bauteiles beeinträchtigt wird. Der Gewindebohrer hat im Bereich zwischen den Arbeitsteilen und dem Schaft einen Senker, mit dem eine Senkung an der Bohrung angebracht werden kann.

Der Erfindung liegt die Aufgabe zugrunde, das gattungsgemäße Werkzeug so auszubilden, daß das Gewinde im Einlaufbereich einwandfrei hergestellt wird.

Diese Aufgabe wird beim gattungsgemäßen Werkzeug erfindungsgemäß mit den kennzeichnenden Merkmalen des Anspruches 1 gelöst.

Beim erfindungsgemäßen Werkzeug sorgt die Gewindeentgratschneide dafür, daß am Ende des Gewindebohrvorganges der erste, unvollständige Gewindegang zumindest teilweise abgeschert wird. Dadurch wird verhindert, daß beim Einschrauben eines Schraubteiles in die Gewindebohrung der Gewindesteg des ersten, unvollständigen Gewindeganges weggedrückt oder abgetragen wird. Dadurch ist sichergestellt, daß das in die Gewindebohrung einzuschraubende Bauteil seine Funktion einwandfrei erfüllt.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in Seitenansicht ein als Gewindebohrer ausgebildetes erfindungsgemäßes Werkzeug,
- Fig. 2: einen Schnitt längs der Linie II-II in Fig. 1,
- Fig. 3a bis Fig. 3c: jeweils in vergrößerter Darstellung einen Schnitt durch Gewindeentgratschneiden des erfindungsgemäßen Werkzeuges,
- Fig. 4: im Axialschnitt ein mit dem erfindungsgemäßen Werkzeug hergestelltes Gewinde,
- Fig. 5: eine Seitenansicht in Richtung des Pfeiles V in Fig. 4,
- Fig. 6: die Einzelheit x gemäß Fig. 4 in vergrößerter Darstellung,
- Fig. 7a bis Fig. 7c: jeweils im Schnitt und in vergrößerter Darstellung den Anfangsbereich des Gewindes gemäß Fig. 4.

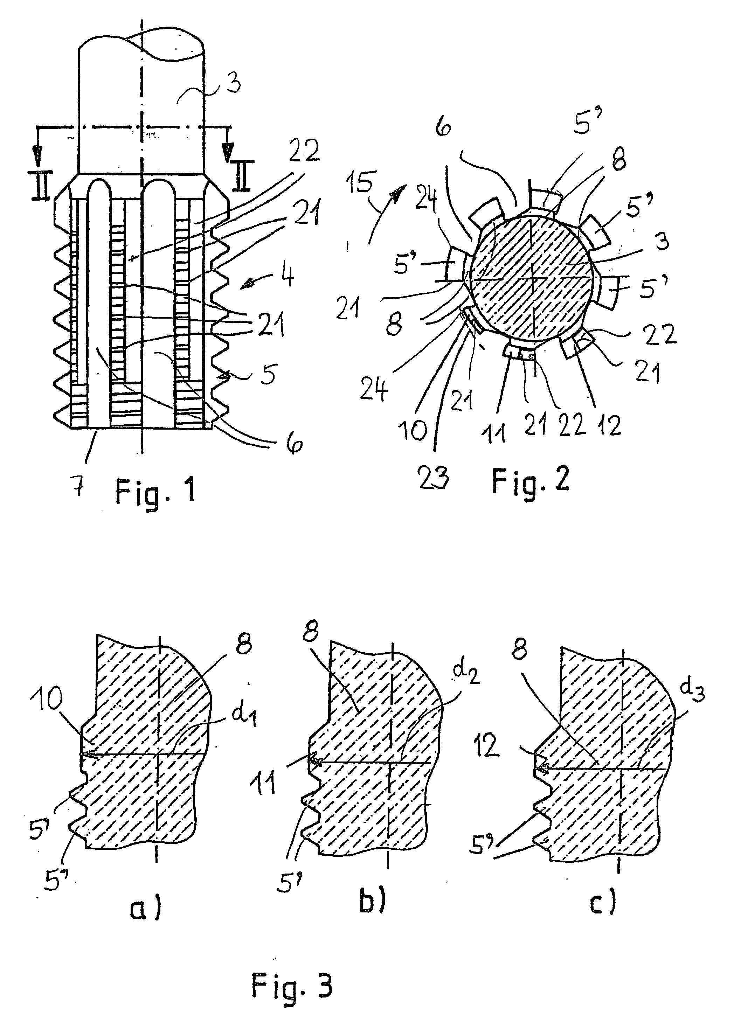

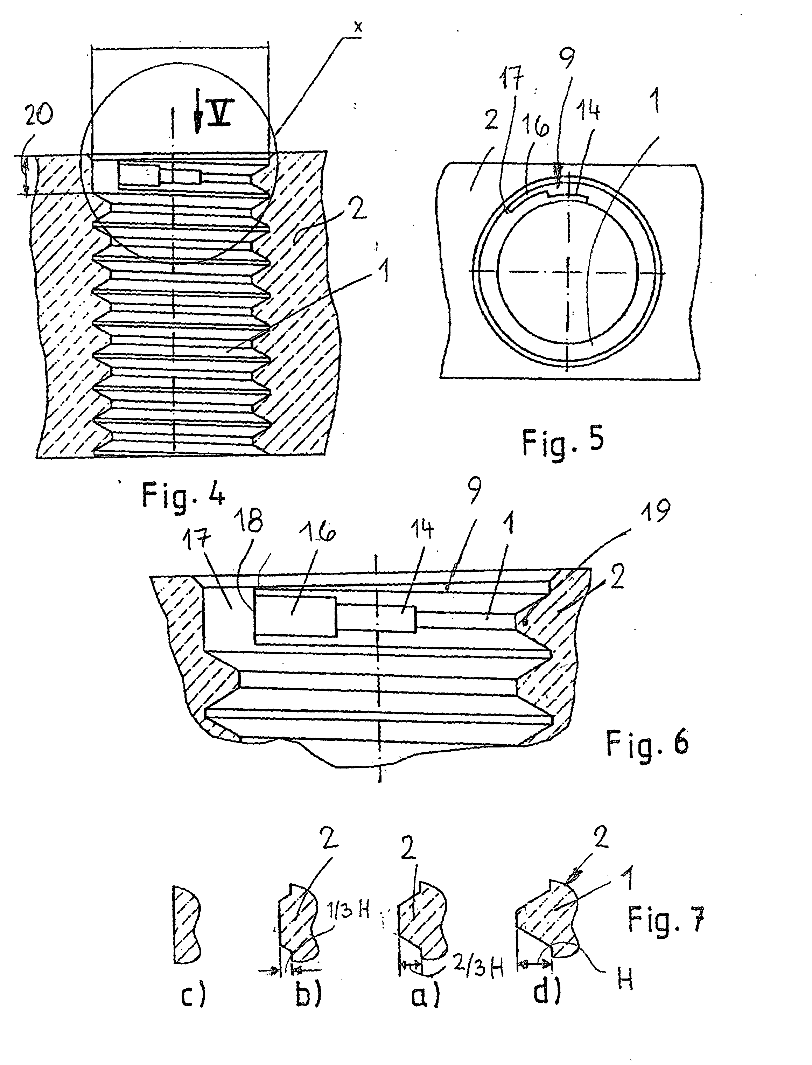

Mit dem Gewindebohrer gemäß den Fig. 1 bis 3 wird ein Gewinde 1 (Fig. 4) in einem Werkstück 2 hergestellt. Das Gewinde 1 kann in einer Durchgangsbohrung oder auch in einer Sacklochbohrung vorgesehen sein. Der Gewindebohrer hat einen Schaft 3 (Fig. 1), mit dem er in eine (nicht dargestellte) Antriebsspindel eingespannt wird. An den Schaft 3 schließt ein Arbeitsteil 4 an, der eine spiralförmig umlaufende Gewindeschneide 5 hat. Der Arbeitsteil 4 ist mit über den Umfang verteilt angeordneten, parallel zur Achse des Gewindebohrers sich erstreckenden Spannuten 6 versehen, die sich von der Stirnseite 7 des Gewindebohrers bis nahezu zum Schaft 3 erstrekken. Durch die Spannuten 6 wird die Gewindeschneide 5 in einzelne Schneidteile 5' aufgeteilt, die an den zwischen den Spannuten 6 verbleibenden, parallel zur Achse des Gewindebohrers sich erstreckenden Stollen 8 vorgesehen sind.

Zum Bohren des Gewindes 1 wird der Gewindebohrer um seine Achse rotierend angetrieben und gegen das Werkstück 2 bewegt. Die Schneidteile 5 erzeugen das Gewinde 1 in der Innenwandung der Bohrung des Werkstückes 2.

Der erste Gewindegang 9 (Fig. 6) ist unvollständig. Er wirkt wie ein Grat, der nicht nur das Einschrauben von entsprechenden Schraubteilen erschwert, sondern sich auch nachteilig im Einsatz auswirken kann. Aus diesem Grunde ist der Gewindebohrer mit wenigstens einer Entgratschneide versehen, deren Arbeitsdurchmesser größer als der Kerndurchmesser der Gewindebohrung im Werkstück 2 ist. Diese Entgratschneide befindet sich an dem in Bohrdrehrichtung rückwärtigen Ende des Arbeitsteiles 4. Dadurch gelangt diese Entgratschneide am Ende des Gewindebohrvorganges in den Bereich des ersten, unvollständigen Gewindeganges 9 und entfernt ihn teilweise, so daß ein einwandfreier Gewindeeinlauf gewährleistet ist.

Der Gewindebohrer weist im dargestellten Ausführungsbeispiel drei Entgratschneiden 10 bis 12 auf, die an in Umfangsrichtung benachbarten Stollen 8 vorgesehen sind (Fig. 2). Der Arbeitsdurchmesser dieser Entgratschneiden nimmt von der Entgratschneide 10 zur Entgratschneide 12 zu. Dadurch wird, wie im folgenden noch im einzelnen beschrieben werden wird, der erste, unvollständige Gewindegang 9 in drei Stufen abgetragen, so daß ein sauberer Gewindeeinlauf gebildet wird. Die Entgratschneide 10 hat den kleinsten Arbeitsdurchmesser d₁ (Fig. 3a), der größer ist als der Kerndurchmesser des Gewindes 1 im Werkstück 2. Aufgrund des kleinen Arbeitsdurchmessers d₁ wird mit der Entgratschneide 10 der unvollständige Gewindegang 9 nur über einen kleinen Teil seiner Höhe abgetragen. Fig. 7d zeigt das vollständige Gewinde 1 im Werkstück 2 mit dem Gewindesteg, der die Profilhöhe H hat. Durch die Entgratschneide 10 wird im Gewindebereich 14 (Fig. 5 und 6) der unvollständige Gewindegang 9 auf zwei Drittel der Profilhöhe H des Gewindes 1 abgetragen (Fig. 7a). Die in Bohrdrehrichtung 15 (Fig. 2) nachfolgende Entgratschneide 11 hat einen größeren Arbeitsdurchmesser d₂ als die Entgratschneide 10. Der Arbeitsdurchmesser d₂ ist aber noch kleiner als der Arbeitsdurchmesser der Gewindeschneide 5 bzw. der Schneidteile 5' (Fig. 3b). Dadurch wird im Bereich 16 des Gewindes 1 vom unvollständigen Gewindegang 9 ein größerer Teil abgetragen als im Gewindebereich 14. Im Ausführungsbeispiel ist dieser Abtrag so groß, daß, bezogen auf das vollständige Gewinde mit der Profilhöhe H, die Profilhöhe 1/3 H beträgt (Fig. 7b).

Die in Bohrdrehrichtung 15 nachfolgende Entgratschneide 12 hat den größten Arbeitsdurchmesser d₃ (Fig. 3c), der dem Arbeitsdurchmesser der Gewindeschneide 5 bzw. ihrer Schneidteile 5' entspricht. Mit dieser Entgratschneide 12 wird darum der erste Gewindegang 9 im Bereich 17 (Fig. 5 und 6) vollständig abgetragen. Wie Fig. 7c zeigt, ist in diesem Falle kein Gewindeprofil vorhanden.

Die Arbeitsdurchmesser der drei Entgratschneiden 10 bis 12 sind so abgestuft, daß bis zum vollständigen Gewinde 1 (Fig. 7b) jeweils ein Drittel der Profilhöhe nacheinander abgetragen wird, so daß, wie Fig. 5 zeigt, ein stufenförmiger, allmählich auf die volle Profilhöhe ansteigender Verlauf des ersten Gewindeganges 9 vorhanden ist. Durch eine größere Zahl von Entgratschneiden kann dieser allmähliche Übergang vom Einlaufbereich bis zum vollständigen Gewinde 1 in weitere Stufen aufgeteilt werden, so daß ein sehr sanfter Übergang vom Gewindeanfang 18 (Fig. 6) bis zum vollständigen Gewinde 1 erfolgt. Dadurch besteht nicht mehr die Gefahr, daß beim Einschrauben von Schraubteilen in die Gewindebohrung der erste Gewindegang 9 seitlich weggebogen und gegebenenfalls sogar abgebrochen wird.

Die Entgratschneiden 10 bis 12 sind so am Arbeitsteil 4 des Gewindebohrers angeordnet, daß sie im Bereich des ersten Gewindeganges 9 den Gewindesteg 19 (Fig. 6) mit der Profilhöhe H in der beschriebenen Weise abtragen. Wie die Fig. 3a bis 3c zeigen, nimmt die in Achsrichtung des Gewindebohrers gemessene Breite von der Entgratschneide 10 bis zur Entgratschneide 12 ab. Im Einlaufbereich des Gewindes 1 ergibt sich ein gewindefreier Bereich 20 (Fig. 4), dessen in Achsrichtung des Gewindebohrers gemessene Länge sich nach der Beziehung Steigung + (Senkdurchmesser ― Kerndurchmesser)/2 ergibt. innerhalb dieses gewindefreien Bereiches 20 arbeitet die Entgratschneide 12 (Fig. 4 und 6).

Sobald das Gewinde 1 fertig gebohrt und mit den Entgratschneiden 10 bis 12 der erste, unvollständige Gewindegang 9 entfernt worden ist, wird die Drehrichtung des Gewindebohrers bzw. der Antriebsspindel umgedreht, so daß der Gewindebohrer aus der Gewindebohrung zurückgedreht wird. Bei diesem Zurückdrehen wird die Spanwurzel abgeschert. Die Entgratschneiden 10 bis 12 sowie zumindest ein Teil der Schneidteile 5' sind zum besseren Abscheren der Spanwurzel mit Abscherkanten 21 versehen (Fig. 1 und 2). Mit ihnen werden die Spanwurzeln beim Zurückdrehen des Gewindebohrers einwandfrei abgeschert, so daß nach Beendigung des Gewindebohrens ein sauberes Gewinde 1 vorhanden ist.

Zur Bildung der Abscherkanten 21 sind die Entgratschneiden 10 bis 12 an dem in Bohrdrehrichtung 15 rückwärtigen Bereich mit einer zurückgesetzten Fläche 22 versehen, die sich von dem dem Schaft 3 zugewandten Ende des Arbeitsteiles 4 bis nahe an die Stirnseite 7 des Gewindebohrers erstreckt. Die zurückgesetzten Flächen 22 sind an den entsprechenden Stollen 8 vorgesehen, welche die Entgratschneiden 10 bis 12 aufweisen. In Umfangsrichtung des Arbeitsteiles 4 erstrecken sich diese Flächen 22 vorteilhaft etwa über die halbe Breite der Stollen 8 (Fig. 1 und 2).

Die Entgratschneiden 10 bis 12 sowie auch die Schneidteile 5' weisen einen umfangsseitigen Freiwinkel 23 auf, so daß die Entgratschneiden und die Schneidteile 5' lediglich mit ihren in Bohrdrehrichtung 15 vorderen Schneidkanten 24 mit der Bohrungswandung des Werkstückes 2 in Berührung kommen. Der Freiwinkel 23 ist in Fig. 2 der Übersichtlichkeit wegen vergrößert und lediglich im Bereich der Entgratschneide 10 eingezeichnet worden. Da die Abscherkante 21 etwa in halber, in Umfangsrichtung gemessener Breite der Entgratschneiden bzw. der Schneidteile 5' vorgesehen ist, liegt diese Abscherkante 21 näher zum Gewinde 1, als wenn die Abscherkante - ohne zurückgesetzte Fläche 22 - an dem in Bohrdrehrichtung 15 rückwärtigen Ende der Entgratschneiden 10 bis 12 und der Schneidteile 5' vorgesehen wäre. Aufgrund dieser Ausbildung lassen sich die Späne beim Zurückdrehen des Gewindebohrers optimal abscheren und damit entfernen.

Beim beschriebenen und dargestellten Gewindebohrer sind drei Entgratschneiden 10 bis 12 vorgesehen,'die in Umfangsrichtung mit Abstand hintereinander angeordnet und durch jeweils eine Spannut 6 voneinander getrennt sind. Bei einer einfachsten Ausführungsform hat der Gewindebohrer an dem in Bohrrichtung rückwärtigen Ende des Arbeitsteiles 4 nur eine Entgratschneide, die in diesem Falle in einer Stufe den ersten, unvollständigen Gewindegang entfernt. Es ist auch möglich, zwei oder mehr als drei Entgratschneiden vorzusehen, je nach Einsatzfall und/oder Material des mit dem Gewinde zu versehenden Werkstückes 2.

Um die Spanwurzeln beim Zurückdrehen des Gewindebohrers optimal abzuscheren, kann der Gewindebohrer an seinem Kerndurchmesser mitschneidend ausgebildet sein, wobei beim Abscheren der Spanwurzeln eine zusätzliche Verformung im Kern nicht auftritt.

Anstelle eines Gewindebohrers kann zur Herstellung eines Gewindes auch ein Räumwerkzeug verwendet werden, das mit einem schnekkenartigen Schneidteil versehen ist. Auch bei einem solchen Werkzeug ist die Gewindesteigung im Werkzeug selbst vorgesehen, so daß nach der Erzeugung des Gewindes das Werkzeug durch Zurückdrehen aus der Gewindebohrung entfernt werden muß. Auch bei einem solchen Räumwerkzeug ist an dem in Bohrrichtung rückwärtigen Ende des Arbeitsteiles wenigstens eine Entgratschneide vorgesehen, um den ersten, unvollständigen Gewindegang in der beschriebenen Weise zu entfernen.

## Patentansprüche

1. Werkzeug zur Herstellung eines Gewindes (1) in einem Werkstück (2), vorzugsweise Gewindebohrer, mit einem Schaft (3) und einem Arbeitsteil (4), der mit eine Steigung aufweisenden Gewindeschneidteilen (5, 5') versehen ist,
**dadurch gekennzeichnet, daß** am in Bohrrichtung rückwärtigen Endbereich des Arbeitsteiles (4) wenigstens eine Gewindeentgratschneide (10 bis 12) vorgesehen ist, deren Arbeitsdurchmesser (d₁ bis d₃) größer ist als der Kerndurchmesser und höchstens gleich dem Außendurchmesser der Gewindebohrung.

2. Werkzeug nach Anspruch 1,
**dadurch gekennzeichnet, daß** der Arbeitsteil (4) mehrere, vorzugsweise drei Entgratschneiden (10 bis 12) aufweist, die vorzugsweise in Umfangsrichtung des Werkzeuges mit Abstand hintereinander angeordnet sind.

3. Werkzeug nach Anspruch 2,
**dadurch gekennzeichnet, daß** in Umfangsrichtung hintereinander liegende Entgratschneiden (10 bis 12) durch jeweils eine Spannut (6) voneinander getrennt sind.

4. Werkzeug nach Anspruch 2 oder 3,
**dadurch gekennzeichnet, daß** die Entgratschneiden (10 bis 12) unterschiedliche Arbeitsdurchmesser (d₁ bis d₃) haben, und daß vorteilhaft die in Bohrdrehrichtung (15) vordere Entgratschneide (10) den kleinsten Arbeitsdurchmesser (d₁) hat.

5. Werkzeug nach einem der Ansprüche 2 bis 4,
**dadurch gekennzeichnet, daß** der Arbeitsdurchmesser (d₁ bis d₃) in Bohrdrehrichtung (15) hintereinander liegender Entgratschneiden (10 bis 12) zunimmt.

6. Werkzeug nach einem der Ansprüche 1 bis 5,
**dadurch gekennzeichnet, daß** die Entgratschneide (10) mit dem kleinsten Arbeitsdurchmesser (d₁) die größte axiale Länge hat.

7. Werkzeug nach einem der Ansprüche 1 bis 6,
**dadurch gekennzeichnet, daß** die Entgratschneide (12) mit dem größten Arbeitsdurchmesser (d₃) die kleinste axiale Länge hat.

8. Werkzeug nach einem der Ansprüche 1 bis 7,
**dadurch gekennzeichnet, daß** zumindest die Entgratschneide (10 bis 12) an ihrem in Bohrdrehrichtung (15) rückwärtigen Bereich mindestens eine Abscherkante (21) aufweist, die vorzugsweise durch eine radial zurückgesetzte Fläche (22) am Arbeitsteil (4) gebildet ist.

9. Werkzeug nach einem der Ansprüche 1 bis 8,
**dadurch gekennzeichnet, daß** die Entgratschneide (10 bis 12) an einem Stollen (8) des Arbeitsteiles (4) vorgesehen ist, und daß sich vorteilhaft die zurückgesetzte Fläche (22) über einen Teil der axialen Länge des Stollens (8) erstreckt.

10. Werkzeug nach Anspruch 8 und Anspruch 9,
**dadurch gekennzeichnet, daß** die Abscherkante (21) mit Abstand von der in Bohrdrehrichtung (15) rückwärtigen Seitenfläche des Stollens (8) liegt, vorzugsweise etwa in halber Breite des Stollens (8).

11. Werkzeug nach einem der Ansprüche 1 bis 10,
**dadurch gekennzeichnet, daß** der Arbeitsteil (4) an seinem Kerndurchmesser mitschneidend ausgebildet ist.

## Claims

1. A tool for manufacturing a thread (1) in a work piece (2), preferably a tap, with a shaft (3) and a working part (4) which is provided with thread-cutting parts (5, 5') having a gradient,
**characterised in that**, on the end region of the working part (4) rearward in the boring direction, at least one thread-deburring cutter (10 to 12) is provided, the working diameter (d₁ to d₃) of which is larger than the core diameter and at most equal to the outer diameter of the threaded bore.

2. A tool according to Claim 1,
**characterised in that** the working part (4) has a plurality of, preferably three, debarring cutters (10 to 12), which are preferably arranged spaced apart one behind another in the circumferential direction of the tool.

3. A tool according to Claim 2,
**characterised in that** deburring cutters (10 to 12) positioned one behind the other in the circumferential direction are separated from one another in each case by a flute (6).

4. A tool according to Claim 2 or 3,
**characterised in that** the debarring cutters (10 to 12) have various working diameters (d₁ to d₃) and that the deburring cutter (10) anterior in the direction of boring rotation (15) advantageously has the smallest diameter (d₁).

5. A tool according to one of Claims 2 to 4,
**characterised in that** the deburring cutters (10 to 12) positioned one behind another in the direction of boring rotation (15) are of increasing working diameter (d₁ to d₃).

6. A tool according to one of Claims 1 to 5,
**characterised in that** the deburring cutter (10) with the smallest working diameter (d₁) has the longest axial length.

7. A tool according to one of Claims 1 to 6,
**characterised in that** the deburring cutter (12) with the largest working diameter (d₃) has the shortest axial length.

8. A tool according to one of Claims 1 to 7,
**characterised in that** at least the deburring cutter (10 to 12) in its region rearward in the direction of boring rotation (15) has at least one shearing edge (21), which is preferably formed by a radially recessed surface (22) on the working part (4).

9. A tool according to one of Claims 1 to 8,
**characterised in that** the deburring cutter (10 to 12) is provided on a support (8) of the working part (4), and that the recessed surface (22) advantageously extends over part of the axial length of the support (8).

10. A tool according to Claim 8 and Claim 9,
**characterised in that** the shearing edge (21) is positioned at a distance from the lateral surface of the support (8) rearward in the direction of boring rotation (15), preferably by about half the width of the support (8).

11. A tool according to one of Claims 1 to 10,
**characterised in that** the working part (4) is formed on its core diameter in such a way as to be co-cutting.

## Revendications

1. Outil pour réaliser un taraudage (1) dans une pièce à oeuvrer (2), de préférence taraud, comportant une tige (3) et une partie de travail (4) qui est pourvue d'éléments taraudeurs (5, 5') présentant un pas, **caractérisé en ce qu'**il est prévu, dans la zone d'extrémité arrière de la partie de travail (4) en direction de perçage, au moins un tranchant d'ébavurage (10 à 12) dont le diamètre de travail (d₁ à d₃) est supérieur au diamètre du noyau et tout au plus égal au diamètre extérieur du perçage taraudé.

2. Outil selon la revendication 1, **caractérisé en ce que** la partie de travail (4) comprend plusieurs tranchants d'ébavurage (10 à 12), de préférence au nombre de trois, qui sont agencés de préférence à distance les uns derrière les autres en direction périphérique de l'outil.

3. Outil selon la revendication 2, **caractérisé en ce que** des tranchants d'ébavurage (10 à 12) situés les uns derrière les autres en direction périphérique sont séparés les uns des autres par une gorge à copeaux respective (6).

4. Outil selon l'une ou l'autre des revendications 2 et 3, **caractérisé en ce que** les tranchants d'ébavurage (10 à 12) présentent des diamètres de travail différents (d₁ à d₃), et **en ce que** le tranchant d'ébavurage (10) antérieur en direction de rotation de perçage (15) présente avantageusement le diamètre de travail le plus petit (d₁).

5. Outil selon l'une des revendications 2 à 4, **caractérisé en ce que** les diamètres de travail (d₁ à d₃) de tranchants d'ébavurage (10 à 12) situés les uns derrière les autres en direction de rotation de perçage (15) augmentent.

6. Outil selon l'une des revendications 1 à 5, **caractérisé en ce que** le tranchant d'ébavurage (10) présentant le plus petit diamètre de travail (d₁) présente la plus grande longueur axiale.

7. Outil selon l'une des revendications 1 à 6, **caractérisé en ce que** le tranchant d'ébavurage (12) présentant le plus grand diamètre de travail (d₃) présente la plus petite longueur axiale.

8. Outil selon l'une des revendications 1 à 7, **caractérisé en ce que** le tranchant d'ébavurage (10 à 12) présente au moins dans sa zone arrière en direction de rotation de perçage (15) au moins une arête de cisaillement (21) qui est formée de préférence par une surface (22) radialement en retrait sur la partie de travail (4).

9. Outil selon l'une des revendications 1 à 8, **caractérisé en ce que** le tranchant d'ébavurage (10 à 12) est prévu sur une cannelure (8) de la partie de travail (4), et **en ce que** la surface en retrait (22) s'étend avantageusement sur une partie de la longueur axiale de la cannelure (8).

10. Outil selon les revendications 8 et 9, **caractérisé en ce que** l'arête de cisaillement (21) se trouve à distance de la surface latérale, arrière en direction de rotation de perçage (15), de la cannelure (8), de préférence approximativement à mi-largeur de la cannelure (8).

11. Outil selon l'une des revendications 1 à 10, **caractérisé en ce que** la partie de travail (4) est réalisée de manière à tailler également au niveau du diamètre de son noyau.
